# EUROPEAN PATENT APPLICATION

(11) **EP 2 800 429 A1**
(43) Date of publication of application: **05.11.2014**
(21) Application number: 13305586.3
(22) Date of filing: 03.05.2013
(51) Int. Cl.: H04W 56/00

(54) **Communication system comprising a plurality of communication nodes**

(71) Applicant: ALCATEL LUCENT, 92100 Boulogne-Billancourt (FR)
(72) Inventor: Helmers, Hakon, 91620 Nozay (FR); Zou, Jialin, Murray Hill, NJ New Jersey 07974-0636 (US); Godin, Philippe, 91620 Nozay (FR)
(74) Representative: 2SPL Patentanwälte PartG mbB

(57) **Abstract**

A communication system (100) comprises a plurality of communication nodes (101, 102) that can establish wireless communication links with wireless communication devices (103-110). A first communication node (101) detects a wireless signal propagation delay between the first communication node (101) and a wireless communication device (103) with which a first communication node (101) has established a wireless communication link and that is in the vicinity of a second communication node (102). The first communication node (101) transmits an indication on the wireless signal propagation delay to the second communication node (102). The second communication node (102) applies a downlink transmission delay with respect to a transmission timing applied in the first communication node (101) when transmitting data to wireless communication devices (108-110) with which the second communication node (102) has established wireless communication links. The downlink transmission delay is based on the indication on the wireless signal propagation delay that the first communication node (101) has transmitted to the second communication node (102).

## Description

### FIELD OF THE INVENTION

An aspect of the invention relates to a communication system comprising a plurality of communication nodes arranged to establish wireless communication links with wireless communication devices. The communication system may be, for example, based on a mobile communication specification, such as a 3GPP specification (3GPP is an acronym for third Generation Partnership Project). In particular, the communication system may be an LTE system, LTE being acronym for Long Term Evolution. Other aspects of the invention relate to a communication node, a method of operating a communication system, and a device readable medium comprising a set of instructions.

### BACKGROUND OF THE INVENTION

A wireless communication system may comprise respective communication nodes that constitute respective communication cells. A communication cell is a geographical zone within which a wireless communication device may be serviced by the communication node that constitutes this cell. Servicing implies that the communication node has established a wireless communication link with the wireless communication device.

A time misalignment problem may occur in a hand-over zone between a macro cell, which covers a relatively large geographical zone, and a small cell, which covers a relatively small geographical zone. A significant wireless signal propagation delay may exist between the communication node that constitutes the macro cell and the hand-over zone. Conversely, a rather insignificant wireless signal propagation delay will exist between the communication node that constitutes the small cell and the hand-over zone. In case both communication nodes apply a same transmission timing for transmitting frames, there will be a time misalignment in the hand-over zone between frames received from the one and the other node.

This time misalignment constitutes a problem in case the macro cell and the small cell share a frequency channel for reasons related to, for example, mobility issues or scarcity of available spectrum, or both. Time misalignment between frames in a shared frequency channel results in degraded performance of various functionalities such as, for example, evolved Multimedia Broadcast and Multicast Service (eMBMS), macro/small cell diversity (Collaborative Multi-Point - CoMP) and time-domain inter-cell interference coordination (ICIC). Another possible consequence of time misalignment is degraded robustness for handovers between small cells and wide-range coverage cells.

### SUMMARY OF THE INVENTION

There is a need for a solution that allows a cost-efficient remedy of the time misalignment problem in a communication system of the type concerned.

In order to better address this need, in accordance with an aspect of the invention, there is provided a communication system comprising a plurality of communication nodes arranged to establish wireless communication links with wireless communication devices, wherein:
- a first communication node is arranged to detect a wireless signal propagation delay between the first communication node and a wireless communication device with which a first communication node has established a wireless communication link and that is in the vicinity of a second communication node, the first communication node being further arranged to transmit an indication on the wireless signal propagation delay to the second communication node; and wherein
- the second communication node is arranged to apply a downlink transmission delay with respect to a transmission timing applied in the first communication node when transmitting data to wireless communication devices with which the second communication node has established wireless communication links, the downlink transmission delay being based on the indication on the wireless signal propagation delay that the first communication node has transmitted to the second communication node..

Another aspect of the invention concerns a method of operating a communication system comprising a plurality of communication nodes arranged to establish wireless communication links with wireless communication devices, the method comprising:
- a wireless signal propagation delay detection step, in which a first communication node detects a wireless signal propagation delay between the first communication node and a wireless communication device with which a first communication node has established a wireless communication link and that is in the vicinity of a second communication node;
- a wireless signal propagation delay indication provision step, in which the first communication node transmits an indication on the wireless signal propagation delay to the second communication node; and
- a downlink transmission delay application step, in which the second communication node applies a downlink transmission delay with respect to a transmission timing applied in the first communication node when transmitting data to wireless communication devices with which the second communication node has established wireless communication links, the downlink transmission delay being based on the indication on the wireless signal propagation delay that the first communication node has transmitted to the second communication node.

Yet another aspect of the invention concerns a device readable medium comprising a set of instructions that enables a processor, which is capable of executing the set of instructions, to carry out at least one of the following sets of steps of the method defined hereinbefore:
- a first set of steps comprising the wireless signal propagation delay detection step and the wireless signal propagation delay indication provision step; and
- a second set of steps comprising the downlink transmission delay application step.

Yet another aspect of the invention concerns a communication device for use in a communication system as defined hereinbefore.

In each of these aspects, the downlink transmission delay that the second communication node applies resolves the time misalignment problem discussed hereinbefore. The downlink transmission delay is based on the wireless signal propagation delay that has been detected by the first communication node, which respect to at least one location that is relatively close to the second communication node. The downlink transmission delay is thus automatically obtained. There is no need for a complex configuration operation when deploying the communication system. Moreover, the downlink transmission delay can be automatically obtained without need for additional hardware such as, for example, a network listening module. An implementation of the invention may require some additional software modules only, which can be implemented with relatively little effort and cost.

An embodiment of the invention advantageously comprises one or more of the following additional features, which are described in separate paragraphs. These additional features each contribute to cost-efficiently remedying the time misalignment problem.

The indication on the wireless signal propagation delay is advantageously transmitted using X2 signaling as defined in the specification 3GPP TS 36.423, 3GPP being an acronym for the third Generation Partnership Project that unites telecommunications standards bodies.

The second communication node advantageously submits a request for the indication on the wireless signal propagation delay to the first communication node, and the first communication node advantageously transmits the indication on the wireless signal propagation delay to the second communication node upon reception of this request.

The request for the indication on the wireless signal propagation delay is advantageously transmitted using X2 signaling as defined in the specification 3GPP TS 36.423.

The first communication node advantageously detects the wireless signal propagation delay as part of a process for determining an uplink transmission time shift that the wireless communication device should apply when transmitting data to the first communication node.

The first communication node advantageously obtains an indication that the wireless communication device is in the vicinity of the second communication node based on a received signal strength measurement that the wireless communication device has carried out with regard to the second communication node.

The second communication node may comprise a synchronization module arranged to synchronize a downlink transmission timing signal within the second communication node with a reference signal received from the first communication node. In such an embodiment, the second communication node advantageously applies a time shift to the downlink transmission timing signal so as to obtain the downlink transmission delay when transmitting data to wireless communication devices with which the second communication node has established wireless communication links.

A communication system in accordance with the invention may comprise respective communication nodes that are neighbor to the second communication node and that detect respective wireless signal propagation delays between the respective communications nodes and respective wireless communication devices with which the respective communication nodes have established a wireless communication link and that are in the vicinity of the second communication node. The aforementioned first communication node thus forms part of these respective communication nodes. The respective communication nodes transmit respective indications on the respective wireless signal propagation delays to the second communication node. The second communication node determines the downlink transmission delay as a function of the respective indications on the respective wireless signal propagation delays that the respective communication nodes have transmitted to the second communication node.

The second communication node advantageously determines a maximum and a minimum among the respective indications on the respective wireless signal propagation delays, and determines the downlink transmission delay as an average between this maximum and this minimum.

The second communication node advantageously determines the downlink transmission delay so that this delay falls within a duration of a cyclic prefix used in downlink transmissions, a downlink transmission being a transmission from a communication node to a wireless communication device.

For the purpose of illustration, a detailed description of some embodiments of the invention is presented with reference to accompanying drawings.

### BRIEF DESCRIPTION OF THE DRAWINGS

FIG. 1 is a schematic diagram that illustrates a communication system that comprises a plurality of communication nodes.
FIG. 2 is a block schematic diagram that illustrates a communication node.
FIG. 3 is a conceptual diagram that illustrates a time misalignment problem in the communication system.
FIG. 4 is a flow chart diagram that illustrates a method of operating the communication system that remedies the time misalignment problem.
FIG. 5 is a conceptual diagram that illustrates a variant of the method for a case where a small cell has various neighboring macro cells.

### DETAILED DESCRIPTION

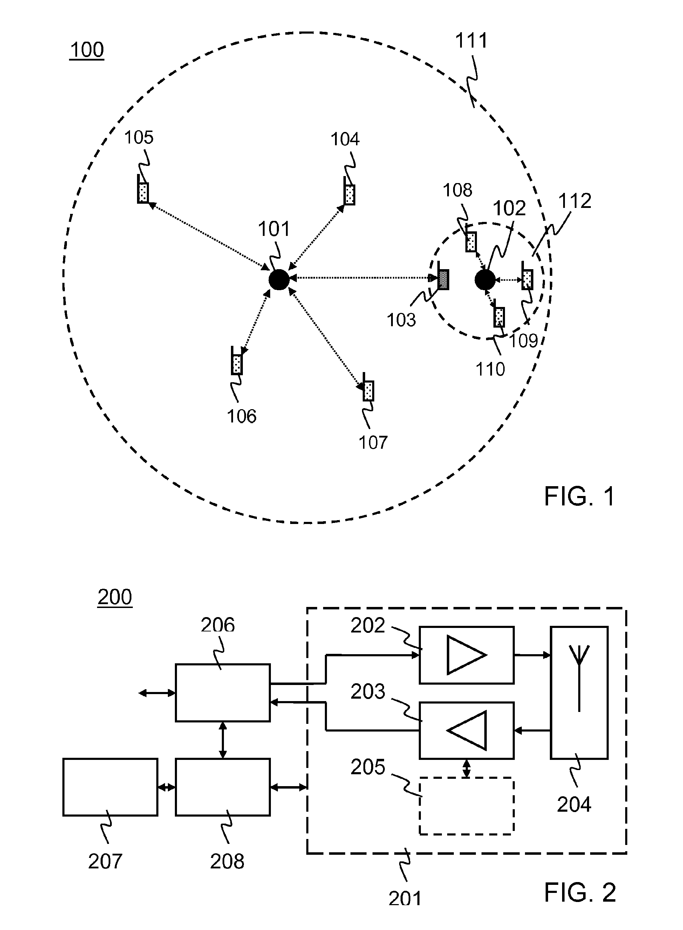

FIG. 1 schematically illustrates a communication system 100 that comprises a plurality of communication nodes 101, 102. For reasons of clarity of explanation, only two communication nodes are represented in FIG. 1: a first communication node 101 and a second communication node 102. The communication system 100 further comprises various wireless communication devices 103-110, which are represented as relatively small rectangles in FIG. 1. A wireless communication device may be in the form of, for example, a smart phone, or a tablet computer.

The communication system 100 may be based on a mobile communication specification, such as, for example, a 3GPP specification. 3GPP is an acronym for the third Generation Partnership Project (3GPP) that unites telecommunications standards bodies. In particular, the communication system 100 may be an LTE system, LTE being acronym for Long Term Evolution. In such a system, a communication node is referred to as "Evolved Node B", abbreviated as "eNodeB" or "eNB".

FIG. 2 schematically illustrates a communication node 200 by means of a block diagram. The communication node 200 illustrated in FIG. 2 may be any communication node in the communication system 100 illustrated in FIG. 1, such as, for example, the first communication node 101, or the second communication node 102. The communication node 200 comprises a wireless communication interface 201, which includes a radio transmitter 202, and a radio receiver 203, as well as an antenna arrangement 204. The wireless communication interface 201 may further optionally include a network listening module 205, which will be discussed in greater detail hereinafter. The communication node 200 further comprises a baseband module 206, a memory 207 capable of storing a software program, that is, a set of instructions, and a processor 208 capable of executing this software program. A wireless communication device also typically comprises a wireless communication interface, a baseband module, a memory capable of storing a software program and a processor capable of executing this software program.

In the communication system 100 illustrated in FIG. 1, respective wireless communication interfaces of respective communication nodes are geographically dispersed. The baseband module 206 of a communication node may be physically close to the wireless communication interface 201, whereby these parts may even be comprised in a single unit. The same applies to the memory 207 and the processor 208. However, in a different embodiment, the baseband module 206, as well as the memory 207 and the processor 208, may be physically separated and distant from the wireless communication interface 201. In fact, respective baseband modules, respective memories, and respective processors of respective communication nodes may be physically grouped at a single location.

Basically, the communication system 100 illustrated in FIG. 1 operates as follows. The first communication node 101 can establish wireless communication links with wireless communication devices that are within a geographical zone around the wireless communication interface 201 of the first communication node 101. That is, the first communication node 101 constitutes a first communication cell 111, which corresponds to the aforementioned geographical zone, within which the first communication node 101 can service wireless communication devices. Similarly, the second communication node 102 constitutes a second communication cell 112, within which the second communication node 102 can service wireless communication devices.

In FIG. 1, the first communication cell 111 is relatively large. That is, the first communication cell 111 has a border that is relatively distant from the first communication node 101. The fact that the first communication cell 111 is relatively large can be due to the following factors. For example, the first communication node 101 may establish wireless communication links in a frequency band wherein wireless propagation loss is relatively low, such as, for example, a frequency band comprised between 700 and 800 MHz. The antenna arrangement of the first communication node 101 may have a relatively high location, and the transmitter may be relatively powerful. For reasons of convenience, the first communication cell 111 will be referred to as macro cell 111 hereinafter. The first communication node 101 will be referred to as macro cell node 101 hereinafter.

The second communication cell 112 is relatively small. The fact that the second communication cell 112 is relatively small, despite a relatively low wireless propagation loss by using the same frequency band, can be due to the following factors. For example, the antenna arrangement of the second communication node 102 may have a relatively low location, and the transmitter may be relatively weak. For reasons of convenience, the second communication cell 112 will be referred to as small cell 112 hereinafter. The second communication node 102 will be referred to as small cell node 102 hereinafter.

FIG. 1 illustrates a scenario wherein the small cell 112 is entirely comprised within the macro cell 111. That is, the small cell 112 is entirely overlapped by the macro cell 111. In such a scenario, the small cell 112 primarily serves to enhance communication capacity rather than to improve geographical coverage. In the small cell 112, a larger number of wireless communication links can simultaneously be established than would have been possible if the small cell node 102 were absent. A wireless communication device within the small cell 112 can establish a wireless communication link with the macro cell node 101, as well as with the small cell node 102. This enhances communication capacity.

In any communication node, a wireless communication link between a communication node and a wireless communication device involves two-way transmissions: so-called downlink transmissions, and so-called uplink transmissions. Downlink transmissions are transmissions from the communication node to the wireless communication device. Uplink transmissions are transmissions from the wireless communication device to the communication node. In these transmissions, data is typically transmitted by means of frames aligned to a grid of discrete points in time, which mark frame borders. A system reference timing typically defines this grid of discrete points in time. The system reference timing may be derived from, for example, a GPS signal, GPS being an acronym for Global Positioning System, or according to a network-based method, such as, for example, a method defined in a standard referenced as IEEE 1588v2.

Transmissions within a communication cell, downlink and uplink, are carried out in frequency channels, which are located in a frequency band reserved for wireless communication. The frequency band may be, for example, around 700 or 800 MHz. In communication systems, such as LTE, neighboring communication cells may use identical frequency channels. In such a case, there is a so-called co-channel deployment of communication cells. Co-channel deployment can offer various advantages, such as, an efficient use of available spectrum and enhanced mobility.

Co-channel deployment of communication cells potentially entails a time misalignment problem between neighboring communication cells. Let it be assumed that the macro cell 111 and the small cell 112 illustrated in FIG. 1 use identical frequency channels for downlink transmissions. FIG. 1 illustrates a wireless communication device 103 that is in the vicinity of the small cell node 102, but still within the macro cell 111 and serviced by the macro cell node 101. That is, the wireless communication device 103 is within a hand-over zone between the macro cell 111 and small cell 112: a zone where both aforementioned cells can service a wireless communication device and, therefore, a hand-over may take place.

Downlink transmissions of the macro cell node 101 arrive at the wireless communication device 103 after a significant wireless signal propagation delay. It takes some time for a frame that the macro cell node 101 transmits to arrive at the wireless communication device 103 due to a significant distance that exists between the macro cell node 101 and the wireless communication device 103. However, downlink transmissions of the small cell node 102 arrive at the wireless communication device 103 after a relatively small wireless signal propagation delay only.

The time misalignment problem becomes manifest in case the macro cell node 101 and the small cell node 102 apply an identical transmission timing, which may be the system reference timing. In the hand-over zone, there will be a time misalignment between, on the one hand, frames arriving from the macro cell node 101 and, on the other hand, frames arriving from the small cell node 102. This may result in degraded performance of various functionalities such as, for example, evolved Multimedia Broadcast and Multicast Service (eMBMS), macro/small cell diversity (Collaborative Multi-Point - CoMP) and time-domain inter-cell interference coordination (ICIC). Another possible consequence of time misalignment is degraded robustness for handovers between small cells and wide-range coverage cells.

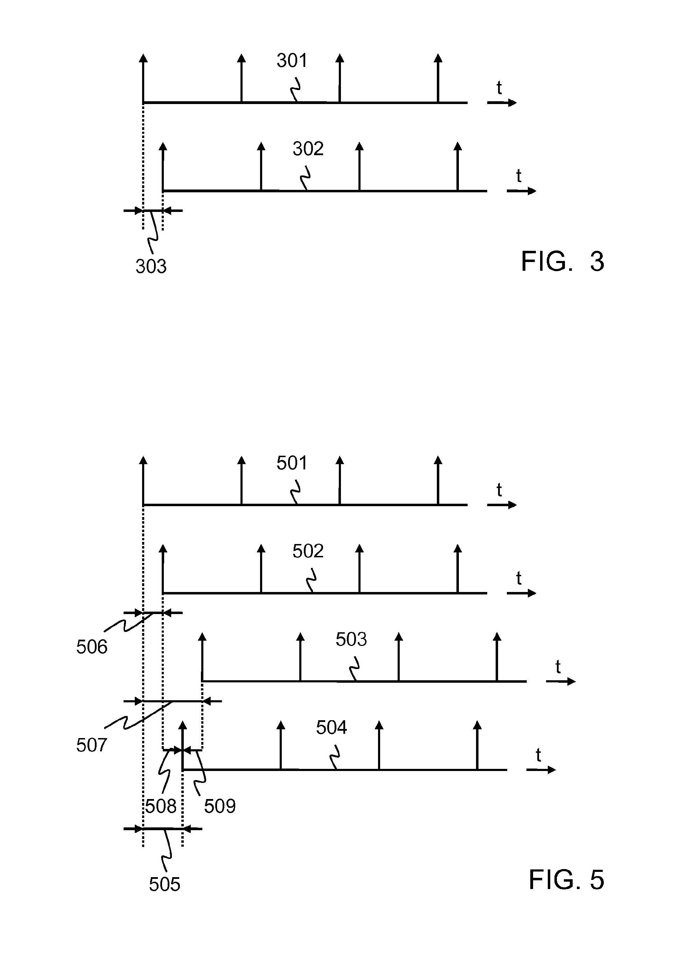

FIG. 3 conceptually illustrates the time misalignment problem described hereinbefore, which may occur in the communication system 100 illustrated in FIG. 1. FIG. 3 is a combination of two time diagrams 301, 302. An upper time diagram 301 represents the system reference timing mentioned hereinbefore according to which the macro cell node 101 transmits downlink frames. A lower time diagram 302 represents a timing of downlink frames received from the macro cell 111 mode at a point in the vicinity of the small cell node 102. In each time diagram, vertical arrows represent discrete points in time when a frame may start. There is a timing offset 303 between these frame-start points in the upper time diagram 301, which represents the system reference timing, and frame-start points in the lower diagram 302, which represents the timing at the point in the vicinity of the small cell node 102. This timing offset 303 corresponds to a wireless signal propagation delay from the antenna arrangement of the macro cell node 101 to the point in the vicinity of the small cell node 102.

The time misalignment problem can be mitigated by use of a so-called cyclic prefix in downlink communications. A cyclic prefix is used in LTE systems. The cyclic prefix is basically a redundancy in transmission in order to avoid, for example, intersymbol interference. A symbol is transmitted with a duration that is longer than necessary for detecting the symbol at a receiving end under ideal conditions. The cyclic prefix extends the symbol by a given duration. In LTE systems, this cyclic prefix duration may be 5 µs, which is called a "normal" duration, or 15 µs, which is called an "extended" duration.

In case the wireless signal propagation delay is less than the cyclic prefix duration, the cyclic prefix can remedy the time misalignment problem. However, the cyclic prefix reduces data transmission capacity: the longer the cyclic prefix duration is, the greater the reduction in transmission capacity. Thus, remedying the time misalignment problem by using the cyclic prefix with the extended duration, instead of the normal duration, comes at a price of reduced transmission capacity.

The time misalignment problem can also be mitigated by including in the small cell node 102 illustrated in FIG. 1, the network listening module 205, which was mentioned hereinbefore with reference to FIG. 2. The network listening module 205 comprises a receiver for receiving downlink transmissions from neighboring communication nodes, such as the macro cell node 101. The network listening module 205 further comprises a synchronization circuit for synchronizing a timing signal with a downlink transmission signal from a neighboring communication node that serves as a reference. The small cell node 102 may then use this timing signal for its downlink transmissions so as to reduce, or even eliminate, the time misalignment described hereinbefore.

However, in case of co-channel deployment, this synchronization solution can only work if there are sufficient periods when the small cell node 102 does not make any downlink transmission. The network listening module 205 can only receive downlink transmissions from the macro cell node 101 without interference during these periods. Accordingly, the synchronization solution can be applied to only if it is guaranteed that the small cell node 102 will never, or hardly ever, be solicited to an extent that downlink transmissions need to be made relatively frequently, or even continuously.

Thus, the synchronization solution can be applied only if the small cell node 102 has a relatively low load. This may be the case in, for example, home applications, and small office applications. The synchronization solution may not be suitable if the small cell node 102 is deployed in a public area, where it can be expected to have a relatively high load.

The synchronization solution may suffer from another problem. Let it be assumed that the small cell 112 illustrated in FIG. 1 is, at least partially, also comprised in another macro cell, which is not illustrated in this figure. This other macro cell will then be neighboring to the macro cell 111. The small cell 112 will be in between these macro cells. In such a scenario, the network listening module will receive downlink transmissions from the macro cell 111 illustrated in FIG. 1 and from the other, neighboring macro cell. The synchronization circuit of the network listening module may have difficulty in distinguishing between these respective downlink transmissions. There is a risk that the synchronization circuit temporarily synchronizes with the macro cell 111 and then synchronizes with the other, neighboring macro cell. The network listening module, or rather the timing signal that is synchronized, may be ping-ponging, as it were, between the one and the other macro cell. This ping-ponging problem is exacerbated when there are even further neighboring macro cells.

Yet another solution is to configure the small cell node 102 upon installation so that the small cell node 102 applies an appropriate downlink transmission timing delay, which mitigates the time misalignment problem, or even eliminates this problem. An installer may determine the appropriate transmission timing delay by considering cells that are neighboring to the small cell node 102, in particular macro cells. However, this installation-based solution also entails additional cost and effort. Moreover, this solution is not future proof: a change in system topology will typically require reconfiguration of the small cell node 102. This entails further additional cost.

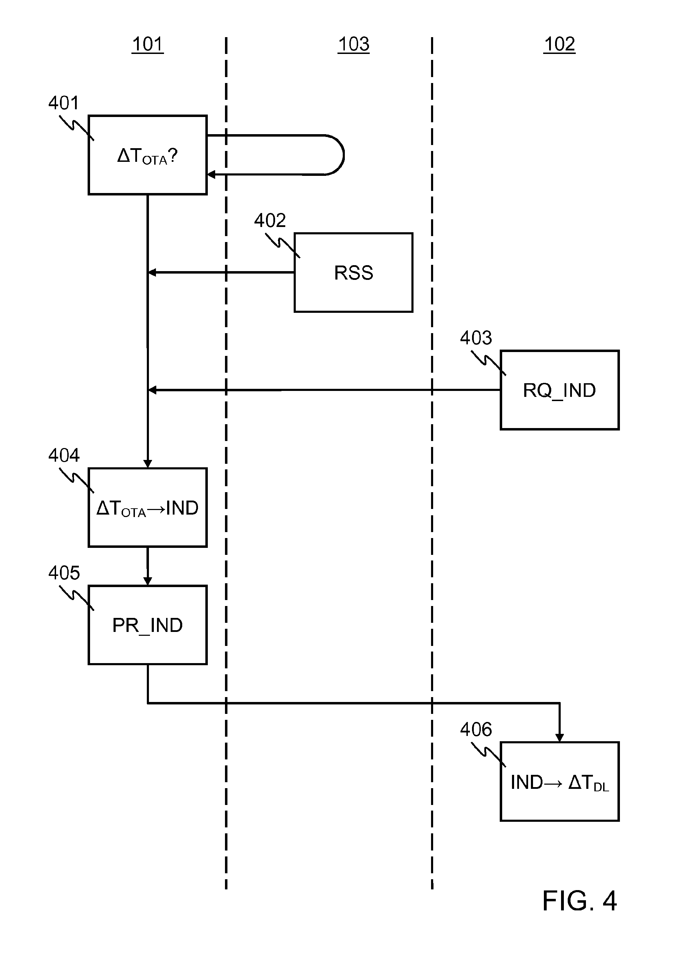

FIG. 4 illustrates a method of operating the communication system 100, which at least mitigates the time misalignment problem in an advantageous manner, and can provide further advantages. The method comprises a series of steps 401-406, which involve the macro cell node 101, the small cell node 102, and the wireless communication device 103 that is in the vicinity of the small cell node 102, but still within the macro cell 111 and serviced by the macro cell node 101. FIG. 4 is vertically divided into several parts. A left-hand part illustrates various steps that macro cell node 101 carries out. A middle part illustrates various steps that the wireless communication device 103 carries out. A right-hand part illustrates various steps that small cell node 102 carries out.

The left-hand part of FIG. 4 may be regarded as a flowchart representation of a software program, that is, a set of instructions, which can be stored in the memory of the macro cell node 101. This software program enables the macro cell node 101 to carry out various operations, by means of its processor, which are described hereinafter with reference to FIG. 4. Likewise, the middle part and the right-hand part of FIG. 4 may be regarded as respective flowchart representations of respective software programs, which enable the wireless communication device 103 and the small cell node 102, respectively, to carry out various operations described hereinafter with reference to FIG. 4.

In a wireless signal propagation delay detection step 401, the macro cell node 101 detects a wireless signal propagation delay (ΔT_{OTA}?) that exists between the macro cell node 101 and the wireless communication device 103 that is in the vicinity of the small cell node 102. It is recalled the macro cell node 101 has established a wireless communication link with this wireless communication device 103, which is therefore serviced in the macro cell 111. There may be at least one further wireless communication device that is serviced within the macro cell 111 and that also is in the vicinity of the small cell node 102. The macro cell node 101 may thus also detect a wireless signal propagation delay which respect to such a further wireless communication device.

The macro cell node 101 may detect a wireless signal propagation delay with respect to a wireless communication device in the following manner. The wireless communication device makes an uplink transmission at a given instant, according to an internal reference timing. This internal reference timing may be, for example, the system reference timing with an offset that corresponds with a signal propagation delay between the macro cell node 101 and the wireless communication device. The uplink transmission arrives at the macro cell node 101 at a later instant. The macro cell node 101 observes when the uplink transmission arrives at its wireless communication interface. Accordingly, the macro cell 111 can derive the wireless signal propagation delay, which exists between the wireless communication device and the macro cell node 101, from the instant of arrival of the uplink transmission relative to the system reference timing.

In fact, the macro cell node 101 may already need to observe time of arrival of uplink transmissions for the following purpose. Uplink transmissions should arrive at the macro cell node 101 according to a desired timing, which is related to the system reference timing. In order to do so, a wireless communication device applies an uplink transmission time shift, which may initially be a predefined value. The uplink transmission time shift, which is typically an advance, should, in effect, compensate for the wireless signal propagation delay that exists between the wireless communication device and the macro cell node 101.

Initially, this compensation for the wireless signal propagation delay, which is based on the predefined value, will typically be inadequate. An uplink frame will arrive too soon or too late at the wireless communication interface of the macro cell node 101 with respect to the desired timing. The macro cell node 101 will detect this and request the wireless communication device to adjust its uplink transmission time shift accordingly, so as to achieve better compensation. This adjustment process of the uplink transmission time shift may thus be used to detect the wireless signal propagation delay between the macro cell node 101 and the wireless communication device 103.

In a signal strength measurement step 402 (RSS), the wireless communication device 103 carries out received signal strength measurements with respect to signals received from communication nodes. The macro cell node 101, which services the wireless communication device 103, may configure the wireless communication device 103 to carry out these measurements. Received signal strength measurements may serve to detect whether the wireless communication device 103 may receive better service from another communication node than the macro cell node 101, which presently services the wireless communication device 103. That is, received signal strength measurements serve a purpose of mobility.

The wireless communication device 103 may thus carry out a received signal strength measurement with respect to the small cell node 102. In case a received signal from the small cell node 102 is relatively strong, the wireless communication device 103 may thus conclude that it is in the vicinity of the small cell node 102. For example, the small cell node 102 may compare a measured strength of this received signal with a predefined threshold. In case the measured strength exceeds the predefined threshold, the wireless communication device 103 detects that it is close to the small cell node 102. The wireless communication device 103 may then signal this to the macro cell node 101 in an uplink transmission. Alternatively, the wireless communication device 103 may report the measured strength of the received signal to the macro cell node 101, which may then detect whether the wireless communication device 103 is in the vicinity of the small cell node 102, or not.

In a wireless signal propagation delay indication request step 403 (RQ_IND), the small cell node 102 requests the macro cell node 101 to provide an indication on a wireless signal propagation delay that exists between the macro cell node 101 and a hand-over zone between the macro cell 111 and the small cell 112. The small cell node 102 may submit such a request to the macro cell node 101 using X2 signaling as defined in the specification 3GPP TS 36.423, 3GPP being an acronym for the third Generation Partnership Project that unites telecommunications standards bodies.

In a wireless signal propagation delay indication generation step 404 (ΔT_{OTA}→IND), the macro cell node 101 identifies among the wireless communication devices that the macro cell node 101 services, those devices that are in the vicinity of the small cell node 102. These latter devices will be referred to as small cell proximity devices. The wireless communication device 103 illustrated in FIG. 1 and discussed hereinbefore is a small cell proximity device, and will be identified as such. As indicated hereinbefore, there may be at least one further small cell proximity device.

The macro cell node 101 then uses respective wireless signal propagation delays that have been detected with respect to respective small cell proximity devices to generate the indication on the wireless signal propagation delay that the small cell node 102 has requested. For example, let it be assumed that the wireless communication device 103 illustrated in FIG. 1 and discussed hereinbefore is the only small cell proximity device. In that case, the requested indication on the wireless signal propagation delay may correspond with the wireless signal propagation delay that has been detected with respect to this wireless communication device 103 as described hereinbefore. As another example, in case there are several small cell proximity devices, the small cell node 102 may calculate an average of respective wireless signal propagation delays that have been detected. The request indication on the wireless signal propagation delay may then correspond with this average.

In a wireless signal propagation delay indication provision step 405 (PR_IND), the macro cell node 101 transmits to the small cell node 102 the indication on the wireless signal propagation delay that the small cell node 102 has requested. This transmission can take place using X2 signaling as defined in the specification 3GPP TS 36.423, mentioned hereinbefore.

In a downlink transmission delay application step 406 (IND→ ΔT_{DL}), the small cell node 102 uses the indication on the wireless signal propagation delay that the macro cell node 101 has provided to apply a downlink transmission delay. The small cell node 102 applies the downlink transmission delay with respect to a downlink transmission timing that the macro cell node 101 applies. This latter transmission timing is typically based on the system reference timing. The small cell node 102 applies the downlink transmission delay when transmitting data to the wireless communication devices that are serviced in the small cell 112.

Accordingly, the small cell node 102 will delay transmission of a downlink frame with respect to the system reference timing by an amount that is based on the indication of the wireless signal propagation delay that the macro cell node 101 has provided. For example, the downlink transmission delay may be equal to this indication. The small cell node 102 may also apply an offset to this indication to compensate, for example, for an imperfection that the indication is expected to have with regard to an ideal transmission timing.

The downlink transmission delay that the small cell node 102 applies resolves the time misalignment problem discussed hereinbefore. In the method described hereinbefore with reference to FIG. 4, the downlink transmission delay is based on the wireless signal propagation delay that has been detected in the macro cell 111, with respect to at least one location that is relatively close to the small cell 112. In this method, the downlink transmission delay is automatically obtained. There is no need for an additional configuration operation upon installing the small cell node 102. Moreover, the downlink transmission delay can be automatically obtained without need for additional hardware such as, for example, a network listening module. An implementation of the method described hereinbefore may require some additional software modules only, which can be implemented with relatively little effort and cost.

The method described hereinbefore with reference to FIG. 4 is a basic example in which it is assumed that the macro cell node 101 illustrated in FIG. 1 is the only macro cell 111 that is neighboring to the small cell 112. However, there may be one or more further macro cells that are neighboring to the small cell 112. The method described hereinbefore can be adapted in the following manner in order to cope with such cases.

Respective neighboring macro cell nodes may each carry out the wireless signal propagation delay detection step 401, the wireless signal propagation delay indication generation step 404, and the wireless signal propagation delay indication provision step 405, which were described hereinbefore. In each neighboring macro cell, a wireless communication device that is serviced within this macro cell may carry out the signal strength measurement step 402 described hereinbefore. In the wireless signal propagation delay indication request step 403, the small cell node 102 may request the respective neighboring macro cells nodes to provide respective indications on a wireless signal propagation delay. In the downlink transmission delay step, the small cell node 102 may then determine a downlink transmission delay as a function of the respective indications on the wireless signal propagation delay that the respective neighboring macro cell nodes have provided. The small cell node 102 may then apply the thus determined downlink transmission delay, which is based on several indications.

In such a case, where the small cell node 102 receives respective indications on wireless signal propagation delay from respective neighboring macro cell nodes, the small cell node 102 may apply various different strategies for determining the downlink transmission delay that will be applied. For example, one strategy may consist in determining a maximum and a minimum among the respective indications on wireless signal propagation delay that the small cell node 102 has received on request. The small cell node 102 may then determine the downlink transmission delay as an average between this maximum and this minimum. Another strategy may consist in selecting among the respective indications on wireless signal propagation delay that the small cell node 102 has received, one indication that originates from a particular neighboring macro cell. The downlink transmission delay may then be primarily, or even exclusively, based on this selected indication.

The small cell node 102 preferably determines the downlink transmission delay with regard to a cyclic prefix that may be used in downlink transmissions. As described hereinbefore, the cyclic prefix has a given duration. The downlink transmission delay preferably determines the downlink transmission delay so that this delay falls within the duration of the cyclic prefix. For example, the small cell node 102 may preferably verify whether the aforementioned average between the maximum and the minimum among the respective indications on wireless signal propagation delay falls within the duration of the cyclic prefix, or not. In case this average falls within the duration of the cyclic prefix, the small cell node 102 may then apply this average as the downlink transmission delay. In case the average does not fall within the duration of the cyclic prefix, the downlink transmission delay may be primarily, or even exclusively, based on an indication on the wireless signal propagation delay that a particular neighboring macro cell has provided. In that case, the small cell 112 will be time aligned with this particular neighboring macro cell.

The method described hereinbefore may be used to advantage in a scenario different from that illustrated in FIG. 1. For example, the method may be used in a scenario wherein a small cell node is located between two macro cell nodes. In this neighboring macros scenario, the small cell node defines a small cell in a hand-over zone between two neighboring macro cells, which the two macro cell nodes define. The two neighboring macro cells may differ in size. The small cell node may not be entirely comprised in the two neighboring macro cells. There may be a partial overlap only.

FIG. 5 conceptually illustrates the method described hereinbefore that is adapted to the neighboring macros scenario described in the previous paragraph. FIG. 5 is a combination of four time diagrams 501-504. An upper time diagram 501 represents the system reference timing mentioned hereinbefore according to which the two macro cell nodes transmit downlink frames. An upper middle time diagram 502 represents a timing of downlink frames received from a first macro cell node at a point in the vicinity of the small cell node. A lower middle time diagram 503 represents a timing of downlink frames received from a second macro cell node at a point in the vicinity of the small cell node. A lower time diagram 504 represents a transmission timing of downlink frames that the small cell node applies. This transmission timing is shifted which respect to the system reference timing. A downlink transmission delay 505 accounts for this time shift, which remedies the time misalignment problem described herein before. In this example, the downlink transmission delay 505 is an average of a wireless signal propagation delay 506 detected and reported by the first macro cell node, and a wireless signal propagation delay 507 detected and reported by the second macro cell node.

In case the small cell node comprises the network listening module 205 illustrated in FIG. 2, the method described hereinbefore that is adapted to the neighboring macros scenario, may advantageously be used to remedy the ping-ponging problem described hereinbefore. The small cell node may use an indication on wireless signal propagation delay from a particular macro cell node to define a synchronization window that forces the synchronization circuit within the network listening module 205 to synchronize with a signal from this particular macro cell node. Accordingly, the indication can be used by the network listening module to enforce a time alignment of the small cell node with the particular macro cell node, and to prevent disruptions in this time alignment.

The method described hereinbefore may, in effect, also assist the network listening module 205 with regard to downlink transmission timing. For example, let it be assumed that the timing signal that the synchronization circuit of the network listening module 205 provides is used for downlink transmission timing. In case the ping-ponging problem occurs, as described hereinbefore, the downlink transmission timing will be unstable, which may result in degraded performance.

The method described hereinbefore can be used to apply a time shift to the downlink transmission timing so as to ensure that the downlink transmission delay remains stable. For example, referring to FIG. 5, let it be assumed that the network listening module 205 is synchronized with the first macro cell, to which the upper middle time diagram 502 relates. In that case, the method may cause a delaying time shift 508 to be applied to the timing signal that the network listening module provides. This delaying time shift 508 is preferably so that the small cell applies the downlink transmission delay 505 as determined in accordance with the method described hereinbefore. Conversely, let it be now assumed that the network listening module 205 is synchronized with the second macro cell, to which the lower middle time diagram 503 relates. In that case, the method may cause an advancing time shift 509 to be applied to the timing signal that the network listening module provides. This advancing time shift 509 is preferably also so that the small cell applies the downlink transmission delay 505 as determined in accordance with the method described hereinbefore.

### FURTHER REMARKS

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied to advantage in numerous types of products or methods related to telecommunication. For example, the invention may be applied in systems other than those specified defined in 3GPP specifications. LTE is merely an example of a system where the invention can be applied to advantage.

There are numerous different ways of operating a communication system in accordance with the invention. The method described hereinbefore with reference to FIG. 4 is an example that presents various steps in a particular order. However, these steps may be carried out in a different order. It is also possible to combine several steps.

There are numerous different ways of detecting a wireless signal propagation delay. The wireless signal propagation delay detection step 401 described hereinbefore and illustrated in FIG. 4 is merely an example. As another example, let it be assumed that a communication node has established a wireless communication link with a wireless communication device. Let it further be assumed that the wireless communication device has an internal reference timing that is synchronized with a system reference timing received from the communication node. The internal reference timing will thus have an offset with respect to the system reference timing that corresponds with a wireless signal propagation delay that exists between the communication node and the wireless communication device. The communication node can then request the wireless communication device to carry out an uplink transmission according to the internal reference timing, without any offset. The uplink transmission will arrive at the communication node with a delay relative to the system reference timing. This delay corresponds to a so-called round-trip delay, which is twice the aforementioned wireless signal propagation delay. The communication node can thus measure the round-trip delay and divide this delay by two so as to obtain the wireless signal propagation delay that exists between the communication node and the wireless communication device, and vice versa.

There are numerous different ways of determining that a wireless communication device is in the vicinity of a communication node. Received signal strength measurement is merely an example. Other techniques may involve measuring signal propagation delay and measuring an angle of arrival.

In general, there are numerous different ways of implementing the invention, whereby different implementations may have different topologies. In any given topology, a single module may carry out several functions, or several modules may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows remedying a time misalignment problem in accordance with the invention. For example, software may be stored in a suitable device readable medium, such as, for example, a magnetic disk, an optical disk, or a memory circuit. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A communication system (100) comprising a plurality of communication nodes (101,102) arranged to establish wireless communication links with wireless communication devices (103-110), wherein:
- a first communication node (101) is arranged to detect a wireless signal propagation delay (ΔT_{OTA}?) between the first communication node and a wireless communication device (103) with which a first communication node has established a wireless communication link and that is in the vicinity of a second communication node (102), the first communication node being further arranged to transmit an indication on the wireless signal propagation delay (PR_IND) to the second communication node; and wherein
- the second communication node (102) is arranged to apply a downlink transmission delay (IND→ ΔT_{DL}) with respect to a transmission timing applied in the first communication node when transmitting data to wireless communication devices (108-110) with which the second communication node has established wireless communication links, the downlink transmission delay being based on the indication on the wireless signal propagation delay that the first communication node has transmitted to the second communication node.

2. A communication system according to claim 1, wherein the indication on the wireless signal propagation delay is transmitted (PR_IND) using X2 signaling as defined in the specification 3GPP TS 36.423, 3GPP being an acronym for the third Generation Partnership Project that unites telecommunications standards bodies.

3. A communication system according to claim 1 wherein the second communication node (102) is arranged to submit a request for the indication on the wireless signal propagation delay (RQ_IND) to the first communication node (101), and wherein the first communication node is arranged to transmit the indication on the wireless signal propagation delay (PR_IND) to the second communication node upon reception of this request.

4. A communication system according to claim 3, wherein the request for the indication on the wireless signal propagation delay is transmitted (RQ_IND) using X2 signaling as defined in the specification 3GPP TS 36.423, 3GPP being an acronym for the third Generation Partnership Project that unites telecommunications standards bodies.

5. A communication system according to claim 1, wherein the first communication node (101) is arranged to detect the wireless signal propagation delay (ΔT_{OTA}?) as part of a process for determining an uplink transmission time shift that the wireless communication device (103) should apply when transmitting data to the first communication node.

6. A communication system according to claim 1, wherein the first communication node (101) obtains an indication that the wireless communication device (103) is in the vicinity of the second communication node (102) based on a received signal strength measurement (RSS) that the wireless communication device has carried out with regard to the second communication node.

7. A communication system according to claim 1, wherein the second communication node (102) comprises a synchronization module (205) arranged to synchronize a downlink transmission timing signal within the second communication node (102) with a reference signal received from the first communication node (101), and wherein the second communication node (102) is arranged to apply a time shift (508, 509) to the downlink transmission timing signal so as to obtain the downlink transmission delay (505) when transmitting data to wireless communication devices (108-110) with which the second communication node has established wireless communication links.

8. A communication system according to claim 1, wherein:
- respective communication nodes that are neighbor to the second communication node (102) are arranged to detect respective wireless signal propagation delays (506, 507) between the respective communications nodes and respective wireless communication devices with which the respective communication nodes have established a wireless communication link and that are in the vicinity of the second communication node, the first communication node (101) forming part of these respective communication nodes; the respective communication nodes being further arranged to transmit respective indications on the respective wireless signal propagation delays to the second communication node; and wherein
- the second communication node (102) is arranged to determine the downlink transmission delay (505) as a function of the respective indications on the respective wireless signal propagation delays that the respective communication nodes have transmitted to the second communication node.

9. A communication system according to claim 8, wherein the second communication node (102) is arranged to determine a maximum and a minimum among the respective indications on the respective wireless signal propagation delays (506, 507), and to determine the downlink transmission delay (505) as an average between this maximum and this minimum.

10. A communication system according to claim 8, wherein the second communication node (102) is arranged to determine the downlink transmission delay (505) so that this delay falls within a duration of a cyclic prefix used in downlink transmissions, a downlink transmission being a transmission from a communication node to a wireless communication device.

11. A communication node (101) arranged to detect a wireless signal propagation delay (ΔT_{OTA}?) between the communication node and a wireless communication device (103) with which the communication node has established a wireless communication link and that is in the vicinity of another communication node (102), the communication node being further arranged to transmit an indication on the wireless signal propagation delay (PR_IND) to the other communication node, so as to enable the other communication node to apply a downlink transmission delay (IND→ ΔT_{DL}) with respect to a transmission timing applied in the communication node when transmitting data to wireless communication devices (108-110) with which the other communication node has established wireless communication links, the downlink transmission delay being based on the indication on the wireless signal propagation delay that the communication node has transmitted to the other communication node.

12. A communication node (102) arranged to apply a downlink transmission delay (IND→ ΔT_{DL}) with respect to a transmission timing applied in another communication node (101) when transmitting data to wireless communication devices (108-110) with which the communication node has established wireless communication links, the downlink transmission delay being based on an indication on a wireless signal propagation delay that the other communication node has transmitted (PR_IND) to the communication node, the wireless signal propagation delay having been detected (ΔT_{OTA}?) by the other communication node as existing between the other communication node and a wireless communication device (103) with which the other communication node has established a wireless communication link and that is in the vicinity of the communication node.

13. A method of operating a communication system (100) comprising a plurality of communication nodes (101,102) arranged to establish wireless communication links with wireless communication devices (103-110), the method comprising:
- a wireless signal propagation delay detection step (401), in which a first communication node (101) detects a wireless signal propagation delay (ΔT_{OTA}?) between the first communication node and a wireless communication device (103) with which a first communication node has established a wireless communication link and that is in the vicinity of a second communication node (102);
- a wireless signal propagation delay indication provision step (405), in which the first communication node transmits an indication on the wireless signal propagation delay (PR_IND) to the second communication node; and
- a downlink transmission delay application step (406), in which the second communication node applies a downlink transmission delay (IND→ ΔT_{DL}) with respect to a transmission timing applied in the first communication node when transmitting data to wireless communication devices (108-110) with which the second communication node has established wireless communication links, the downlink transmission delay being based on the indication on the wireless signal propagation delay that the first communication node has transmitted to the second communication node.

14. A device readable medium comprising a set of instructions that enables a device, which is capable of executing the set of instructions, to carry out at least one of the following sets of steps of the method according to claim 13:
- a first set of steps comprising the wireless signal propagation delay detection step (401) and the wireless signal propagation delay indication provision step (405); and
- a second set of steps comprising the downlink transmission delay application step (406).
